# EUROPÄISCHE PATENTANMELDUNG

(11) **EP 2 072 422 A1**
(43) Veröffentlichungstag der Anmeldung: **24.06.2009**
(21) Anmeldenummer: 08017259.6
(22) Anmeldetag: 01.10.2008
(51) Int. Cl.: B65G 1/04

(54) **Regalbediengerät und Verfahren zum Betreiben eines Regalbediengerätes**

(30) Priorität: 21.12.2007 DE 102007063553
(71) Anmelder: viastore systems GmbH, 70469 Stuttgart (DE)
(72) Erfinder: Link, Ralf, 74321 Bietigheim-Bissingen (DE); Lambeck, Peter, 70199 Stuttgart (DE); Breitenbach, Bernhard, 70499 Stuttgart (DE)
(74) Vertreter: Patentanwälte Ruff, Wilhelm, Beier, Dauster & Partner

(57) **Zusammenfassung**

Die Erfindung betrifft ein Regalbediengerät 10 mit wenigstens einem Mast 12, einem entlang dem Mast 12 verfahrbaren Hubwagen 14 und einem am Hubwagen 14 angeordneten Lastaufnahmemittel 16 zum Bewegen eines Lagergutes 34 im Wesentlichen senkrecht zum Mast 12.

Erfindungsgemäß ist vorgesehen, dass das Regalbediengerät 10 wenigstens eine Einrichtung 38, 40 zum Erfassen einer Position des Lagergutes 34 im Regal 48 während des Zuführens von Lagergut 34 vom Lastaufnahmemittel 16 zu einem Lagerplatz im Regal 48 aufweist.

## Beschreibung

Die Erfindung betrifft ein Regalbediengerät mit wenigstens einem Mast, einem entlang dem Mast verfahrbaren Hubwagen und einem am Hubwagen angeordneten Lastaufnahmemittel zum Bewegen eines Lagergutes im Wesentlichen senkrecht zum Mast. Die Erfindung betrifft außerdem ein Verfahren zum Betreiben eines derartigen Regalbediengerätes.

Regalbediengeräte sind beispielsweise aus der EP 0 564 430 A1 bekannt, in der ein an einem Mast verfahrbar angeordneter Hubwagen sowie ein, an dem Hubwagen befestigtes Lastaufnahmemittel beschrieben ist. Mittels derartiger Regalbediengeräte wird ein Lagergut einem Lagerplatz zugeführt, diesem Lagerplatz entnommen und/oder zwischen dem Lagerplatz und einem Eingangs-/Ausgangsstelle hin und her transportiert. Der Lagerplatz ist beispielsweise in einem Hochregallager vorgesehen. Für die Überwindung von Höhendifferenzen zwischen der Eingangs-/Ausgangsstelle und dem Lagerplatz ist der Hubwagen vorgesehen. Das Lastaufnahmemittel führt dann, beispielsweise bei Erreichen des Lagerplatzes, das Lagergut dem Lagerplatz zu. Um sicherzustellen, dass das Lagergut vollständig in den Bereich des Lagerplatzes eingeführt wurde, wird bei den bekannten Regalbediengeräten das Lagergut mit dem Lastaufnahmemittel bis zu einem Endanschlag in dem Lagerplatz eingebracht. Das Anschlagen des Lagergutes an dem Endanschlag beansprucht jedoch in sehr hohem Maße das Regalbediengerät, insbesondere auch das Lastaufnahmittel. Da darüber hinaus ein Schlupf am Lastaufnahmemittel beim Transport des Lagergutes in den Bereich des Lagerplatzes bei bekannten Regalbediengeräten nicht ausgeschlossen werden kann, kann auch nicht immer gewährleistet werden, dass das Lagergut ausreichend weit in den Bereich des Lagerorts eingebracht wurde.

Der Erfindung liegt daher die Aufgabe zugrunde, ein Regalbediengerät zu schaffen, mittels dem ein Lagergut zuverlässig einem Lagerort zugeführt werden kann, ohne dass das Regalbediengerät unnötigen mechanischen bzw. elektrischen Belastungen ausgesetzt wird.

Gelöst wird diese Aufgabe durch ein erfindungsgemäßes Regalbediengerät mit den Merkmalen des Anspruchs 1 sowie durch ein erfindungsgemäßes Verfahren mit den Merkmalen des Anspruchs 11. Manche der nachfolgenden, jedoch nicht erschöpfend aufgezählten Merkmale und Eigenschaften treffen sowohl auf das Regalbediengerät als auch auf das Verfahren zu. Sie werden teilweise nur einmal beschrieben, gelten jedoch unabhängig voneinander und in beliebiger Kombination sowohl für das Regalbediengerät als auch für das Verfahren. Weiterhin ist die Reihenfolge der aufgelisteten Merkmale nicht bindend, sondern kann vielmehr entsprechend eines optimierten Regalbediengerätes bzw. eines optimierten Verfahrens geändert werden. Einzelmerkmale der unterschiedlichen dargestellten und beschriebenen Ausführungsformen können in beliebiger Weise miteinander kombiniert werden, ohne den Rahmen der Erfindung zu überschreiten.

Erfindungsgemäß ist bei einem Regalbediengerät mit wenigstens einem Mast, einem entlang dem Mast verfahrbaren Hubwagen und einem am Hubwagen angeordneten Lastaufnahmemittel zum Bewegen wenigstens eines Lagergutes im Wesentlichen senkrecht zum Mast vorgesehen, dass das Regalbediengerät wenigstens eine Einrichtung zum Erfassen einer Position eines Lagergutes im Regal während des Zuführens von Lagergut vom Lastaufnahmemittel zu einem Lagerplatz im Regal und umgekehrt aufweist.

Dadurch kann das Lagergut kontrolliert beispielsweise bis zu einem vordefinierten Punkt eines Lagerplatzes transportiert werden. Wesentlich ist bei der Erfindung, dass eine Position des Lagergutes im Regal während des Einlagervorgangs erfasst wird, beispielsweise fortlaufend. Auf diese Weise ist die Position des Lagergutes beim Einlagern stets bekannt und es kann beim Lastaufnahmemittel ohne Schlupf und ohne Endanschläge im Regal gearbeitet werden. Das Erfassen der Position des Lagergutes erfolgt beim Einlagern in das Regal und kann auch beim Auslagern aus dem Regal erfolgen. Der Transport des Lagergutes senkrecht zum Mast des Hubwagens durch das Lastaufnahmemittel, also beispielsweise in den Lagerplatz eines Hochregallagers hinein, kann beispielsweise mittels eines sogenannten Riemenzugförderers, mittels Gabelzinken mittels eines Tischs oder dergleichen vorgenommen werden, wobei durch das Erfassen der tatsächlichen Position des Lagergutes ein gegebenenfalls auftretender Schlupf berücksichtigt wird. Als Schlupf ist erfindungsgemäß das Verhalten eines technischen Elementes zu verstehen, das beispielsweise eigentlich synchronisiert in einem definierten Drehzahlverhältnis zu einem anderen, rotierenden Element mitrotieren sollte, bei dem jedoch die Drehzahl von diesem definierten Verhältnis abweicht. Das erfindungsgemäße Regalbediengerät wird beispielsweise in sogenannten Gassen zwischen zwei als Hochregal ausgebildeten Lagerbereichen eingesetzt. Um entlang dieser Gasse verfahren zu können, sind für das Regalbediengerät schienenartige Vorrichtungen oder dergleichen vorgesehen, die beispielsweise am Boden sowie an der Decke im Bereich der Gasse parallel zum Verlauf der Hochregallager bzw. parallel zum Verlauf der Gasse angeordnet sein können. Mittels entsprechender Vorrichtungen, insbesondere an den Endbereichen des Mastes des Regalbediengerätes, wird das Regalbediengerät dann mit derartigen Schienen in Eingriff gebracht.

Mit dem Hubwagen kann eine vertikale Transportbewegung des Lastaufnahmemittels und damit auch des Lagergutes bewirkt werden. Der Hubwagen kann dazu beispielsweise mittels eines umgelenkten Seiles oder dergleichen, das zusammen mit einem Antrieb ein Hubwerk bildet, in seiner Vertikalposition verstellt werden.

Als Einrichtung zum Erfassen einer Position des Lagergutes kann ein im Wesentlichen beliebig ausgebildeter Sensor bzw. eine im Wesentlichen beliebig ausgebildete Sensoranordnung vorgesehen werden. Im Sinne der Erfindung kann es dabei ausreichend sein, wenn der Sensor lediglich das Vorhandensein oder Nichtvorhandensein eines Lagergutes an einer bestimmten Position erfasst. Dies kann unter Verwendung entsprechender Vorrichtungen, beispielsweise Hilfsmittel wie Magnete, Reflektoren, RFID-Chips oder dergleichen insbesondere am Lagergut und/oder an einer dem Lagergut als Basis dienenden Palette, bewirkt werden. Vorteilhaft ist aber das Erfassen von wenigstens zwei Positionen des Lagerguts im Regal, beispielsweise Endpositionen am ersten, zweiten, dritten bzw. vierten Lagerplatz bei vierfachtiefer Einlagerung. Insbesondere kann eine fortlaufende Erfassung der Position des Lagerguts während des Einlagervorgangs und/oder des Auslagervorgangs vorgesehen sein.

In Ausgestaltung der Erfindung ist zumindest ein Teil der Einrichtung zum Erfassen der Position am Lastaufnahmemittel angeordnet.

Der Sensor kann dabei beispielsweise so angeordnet werden, dass das zu transportierende Lagergut sowohl beim Aufnehmen als auch beim Ablegen an der Einrichtung vorbeigeführt wird. Ist der Sensor beispielsweise als Lichtschranke oder dergleichen ausgebildet, so kann dadurch bei entsprechender Anordnung des Sensors erfasst werden, ob sich das Lagergut noch im Bereich des Sensors befindet oder diesen Bereich bereits verlassen hat.

In Ausgestaltung der Erfindung ist die Einrichtung zum Erfassen der Position an einem das Lastaufnahmemittel zumindest abschnittsweise umgebenden Rahmen angeordnet.

Der Rahmen kann beispielsweise aus Industrieprofilen oder dergleichen bestehen, die als Alu-Strangguss-Profile hergestellt sind. Er dient dann zum Einen als eine Art Schutzvorrichtung für das Lagergut, während dieses auf dem Lastaufnahmemittel positioniert ist. Zum Anderen bietet der Rahmen eine Vielzahl von Möglichkeiten, neben dem Sensor für das Erfassen der Position noch unterschiedlichste Sensoren beispielsweise für Gewicht und/oder Identität des Lagergutes oder dergleichen aufzunehmen. Es ist im Rahmen der Erfindung auch möglich, dass an dem das Lastaufnahmemittel zumindest abschnittsweise umgebenden Rahmen Sensoren zum Erfassen einer Außenkontur des Lagergutes vorgesehen sind, so dass auf diese Weise die Gesamtgröße beziehungsweise das Volumen, oder auch nur die maximale Höhenausdehnung oder dergleichen, ermittelt werden kann.

In Ausgestaltung der Erfindung ist zumindest ein Teil der Einrichtung zum Erfassen der Position an dem Hubwagen angeordnet. Alternativ kann zumindest ein Abschnitt der Einrichtung zum Erfassen der Position am Mast angeordnet sein. Wesentlich für die Erfindung ist die Erfassung der Position des Lagergutes senkrecht zum Mast. Dies kann beispielsweise ein Abstand des Lagergutes zu einer gedachten Mittellinie der Lagergasse, ein Abstand vom Mast, vom Hubwagen oder vom Lastaufnahmemittel sein. Sensoren zum Erfassen einer Position des Lagergutes können daher am Mast, am Hubwagen und/oder am Lastaufnahmemittel angeordnet sein.

In Weiterbildung der Erfindung ist die Einrichtung zum Erfassen der Position eine Lichtschranke, ein Näherungsschalter, wenigstens eine Kamera und/oder wenigstens ein CCD-Array.

Eine verwendete Lichtschranke kann in beliebiger Weise ausgebildet sein, beispielsweise als Lichtschranke, bei der Sender und Empfänger in einem gemeinsamen Gehäuse angeordnet sind und der Sender einen Lichtstrahl auf eine Reflektorvorrichtung abgibt. Des Weiteren könnte die Lichtschranke mit voneinander getrennt in verschiedenen Gehäusen angeordneten Sender und Empfänger ausgebildet sein. Schließlich kann auch ein sogenannter Lichtvorhang und/oder eine Vorrichtung verwendet werden, die beispielsweise gemäß einem Laserentfernungsmesser funktioniert.

Ein Näherungsschalter, wie er als Sensor Anwendung finden kann, kann beispielsweise ein kapazitiver bzw. induktiver Schalter sein. Selbstverständlich kann auch ein elektromechanischer Schalter eingesetzt werden, der das Lagergut zum Erfassen berührt.

Eine zum Erfassen der Position vorgesehene Kamera ist vorzugsweise mit einer entsprechenden Steuervorrichtung vorgesehen, in der eine entsprechende Software zum Auswerten eines Kameraausgangssignals implementiert sein kann. Eine derartige Software kann beispielsweise eine Bilderkennungssoftware beinhaltet.

Eine derartige Kamera kann auch einen CCD-Array oder dergleichen aufweisen, also eine sogenannte Digitalkamera sein. Es ist erfindungsgemäß auch möglich, dass der CCD-Array lediglich ein Zeilenarray ist, der dann gemäß einem Lichtvorhang oder dergleichen das erfindungsgemäße Erfassen der Position vornimmt.

In Ausgestaltung der Erfindung ist die wenigstens eine Einrichtung zum Erfassen der Position des Lagergutes ausgebildet und angeordnet, um die Position des Lagergutes in einem Bereich einer dem Mast zugewandten Außenkante eines Regals zu erfassen.

Auf diese Weise kann vorteilhaft gewährleistet werden, dass ein in diesem Regal gelagertes Lagergut nicht über die genannte Außenkante übersteht. So können Teile des Regalbediengerätes bis dicht an die Kante reichen beziehungsweise kann die Gasse vergleichsweise schmal gehalten werden, ohne dass das Regalbediengerät beziehungsweise dessen Teile beispielsweise beim Verfahren in der Gasse mit bereits gelagerten Lagergut zusammenstoßen kann.

In Ausgestaltung der Erfindung weist das Regalbediengerät wenigstens eine Steuervorrichtung für die Auswertung eines Ausgangssignals oder dergleichen der Einrichtung zum Erfassen auf.

Eine derartige Steuervorrichtung kann beispielsweise einen Mikroprozessor, eine speicherprogrammierbare Steuerung (SPS), eine Relaisschaltung oder dergleichen aufweisen. Die Steuervorrichtung ist bevorzugt ausgebildet, um darin eine entsprechende Steuersoftware implementieren zu können.

Die der Erfindung zugrundeliegende Aufgabe wird außerdem mit einem Verfahren zum Betreiben eines Regalbediengerätes mit wenigstens einem Mast, einem entlang dem Mast verfahrbaren Hubwagen und einem am Hubwagen angeordneten Lastaufnahmemittel zum Bewegen wenigstens eines Lagergutes im Wesentlichen senkrecht zum Mast gelöst, wobei das Verfahren die Schritte Positionieren eines Lastaufnahmemittels im Bereich eines Lagerplatzes für das Lagergut, Bewegen des Lagergutes im Wesentlichen senkrecht zum Mast sowie Erfassen zumindest einer Position eines Lagergutes im Regal während des Zuführens von Lagergut vom Lastaufnahmemittel zu einem Lagerplatz im Regal und umgekehrt.

Vorteilhafterweise wird die Position des Lagerguts im Regal an wenigstens zwei Regalpunkten oder fortlaufend während des Ein- und Auslagerns erfasst.

In Ausgestaltung der Erfindung umfasst das Verfahren den Schritt des Erfassens einer Endposition des Lagergutes relativ zum Hubwagen, zum Mast und/oder zum Lastaufnahmemittel.

In weiterer Ausgestaltung der Erfindung umfasst das Verfahren den Schritt des Erfassens der Position mittels wenigstens einer Lichtschranke, eines Näherungsschalters, wenigstens einer Kamera und/oder wenigstens eines CCD-Arrays.

In einer Weiterbildung der Erfindung ist vorgesehen, dass die Endposition des Lagergutes mittels einer Steuervorrichtung als erreicht erfasst wird, wenn das Lagergut einen vordefinierten Abstand zum Hubwagen, Mast und/oder einen vordefinierten Abstand zu einem definierten Punkt am Lastaufnahmemittel aufweist.

Weitere Vorteile und Merkmale der Erfindung ergeben sich aus den Ansprüchen und der nachfolgenden Beschreibung von Ausführungsbeispielen, die anhand der Zeichnungen dargestellt sind. Teilweise sind Merkmale der Ausführungsbeispiele nur in Bezug auf eine Abbildung eines Ausführungsbeispiels beschrieben, können jedoch im Rahmen der Erfindung beliebig mit den anderen Ausführungsbeispielen kombiniert werden. In den schematischen Zeichnungen zeigen:
- Fig. 1: eine Seitenansicht eines erfindungsgemäßen Regalbediengerätes mit unterschiedlichen Möglichkeiten für die Anordnung von erfindungsgemäßen Sensoren,
- Fig. 2: das erfindungsgemäße Regalbediengerät der Fig. 1 in einer für das Regalbediengerät vorgesehenen Gasse zwischen zwei Lagerregalen,
- Fig. 3 und 4: Darstellungen der Funktionsweise des erfindungsgemäßen Regalbediengerätes gemäß einer weiteren Ausführungsform, sowie
- Fig. 5 und 6: Darstellungen der Funktionsweise des erfindungsgemäßen Regalbediengerätes gemäß einer weiteren Ausführungsform.

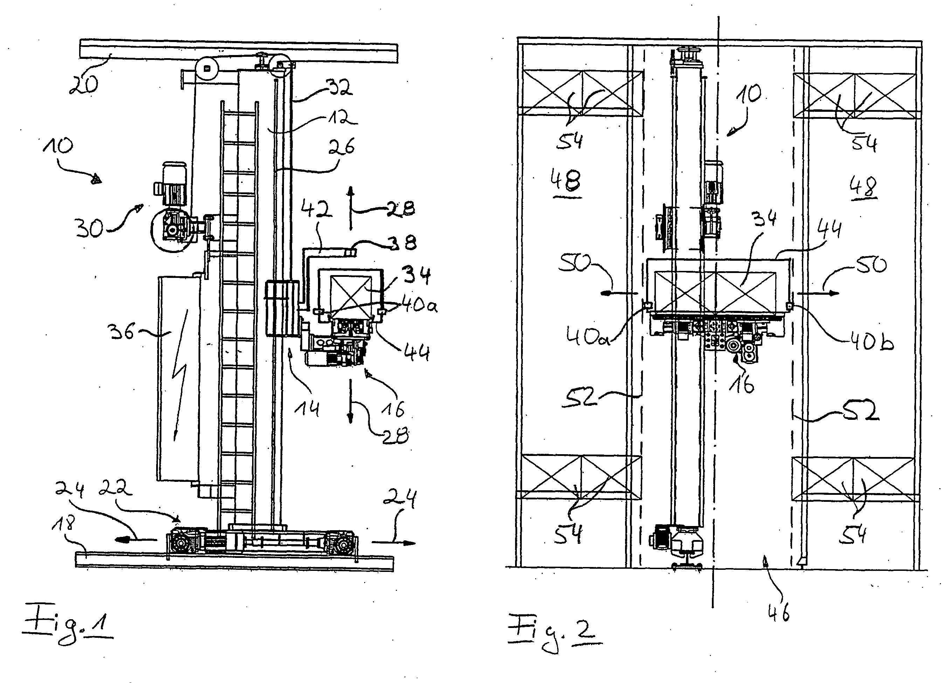

Das in Fig. 1 schematisch dargestellte Regalbediengerät 10 weist einen Mast 12, einen Hubwagen 14 sowie ein Lastaufnahmemittel 16 auf. Der Mast 12 ist zwischen einer bodenseitigen Fahrschiene 18 und einer deckenseitigen Führungsschiene 20 angeordnet und weist entsprechende, mit den Schienen zusammenwirkende Antriebsvorrichtungen 22 auf, um eine Bewegung des Regalbediengerätes 10 in Richtung der Pfeile 24 zu ermöglichen. Die Pfeile 24 weisen in Längsrichtung einer in Fig. 1 nicht dargestellten Gasse, in der das Regalbediengerät angeordnet ist.

Der Hubwagen 14 ist mittels einer Linearführung 26 mit dem Mast 12 verbunden, so dass der Hubwagen 14 in die Richtung der Pfeile 28 deckenwärts bzw. bodenwärts bewegt werden kann. Die Pfeile 28 weisen in Hochrichtung der in Fig. 1 nicht dargestellten Gasse, in der das Regalbediengerät angeordnet ist. Für den Antrieb des Hubwagens 14 ist ein Hubwerk 30 vorgesehen, das den Hubwagen 14 über ein Seil 32 deckenwärts beziehungsweise bodenwärts antreibt, das im deckennahen Endbereich des Mastes 12 über Umlenkrollen geführt ist.

An dem Hubwagen 14 ist ein Lastaufnahmemittel 16 angeordnet, mit dem ein Lagergut 34 oder mehrere Stück Lagergut 34 transportiert werden können.

An dem Regalbediengerät 10 ist weiterhin noch ein Schaltschrank 36 vorgesehen, in dem die notwendigen elektronischen und/oder elektrischen Steuermittel für das Regalbediengerät 10 angeordnet sind.

Um eine Position des Lagergutes 34 zu erfassen, sind an dem Regalbediengerät 10 Sensoren 38, 40 vorgesehen. Dabei ist der Sensor 38 an einem Arm 42 angeordnet, der am Hubwagen 14 befestigt ist. Der Sensor 40a ist dahingegen an einem Rahmen 44 angeordnet, der das Lagergut 34 umgibt und Teil des Lastaufnahmemittels 16 ist. Die Anordnung der Sensoren 38, 40a am Arm 42 bzw. am Rahmen 44 kann alternativ oder gemeinsam realisiert sein.

Der in Fig.1 dargestellte Sensor 38 ist eine nicht näher dargestellte Reflexionslichtschranke. Reflexionslichtschranken weisen im Allgemeinen in einem gemeinsamen Gehäuse einen Lichtsender und einen Lichtempfänger auf. Vom Lichtsender abgestrahltes Licht wird von einer von dem Licht angestrahlten Oberfläche reflektiert und das reflektierte Licht vom Lichtempfänger erfasst. Der Bereich, in dem sich abgestrahlter und reflektierter Lichtstrahl so bewegen, dass der Lichtempfänger den reflektierten Lichtstrahl empfangen kann, ist der Sensorbereich des Sensors 38. Die Lichtschranke kann Unterschiede im Reflexionsverhalten der angestrahlten Oberfläche erfassen, wodurch das Vorhandensein eines zu lagernden Lagergutes 34 auf dem Lastaufnahmemittel 16 erkannt werden kann. Gemäß Fig.1 ist der Sensor 38 oberhalb des Lastaufnahmemittels 16 angeordnet und der Sensorbereich des Sensors 38 so ausgerichtet, dass ein Vorhandensein eines Abschnitts eines Lagergutes 34 gassenseitig einer in Fig.2 dargestellten Außenkante 52 eines Regals 48 erkannt wird.

Der Sensor 40a ist eine so genannte, nicht näher dargestellte Einweg-Lichtschranke. Bei Einweg-Lichtschranken sind der Lichtsender und der Lichtempfänger in getrennten Gehäusen angeordnet, die sich gegenüberliegend angeordnet sind. Der Lichtsender und der Lichtempfänger sind dabei so zueinander ausgerichtet, dass vom Lichtsender abgestrahltes Licht vom Lichtempfänger detektiert werden kann. Der Sensorbereich eines solchen Sensors ist zwischen Lichtsender und Lichtempfänger exakt der Bereich des dazwischen verlaufenden Lichtstrahls. Wie der Fig.1 in Zusammenschau mit Fig.2 zu entnehmen ist, ist der Sensor 40 in einem regalseitigen Endbereich des Rahmens 44 angeordnet, und zwar benachbart zu der in Fig.2 dargestellten Außenkante 52. Wird ein zu lagerndes Lagergut 34 ausgehend vom Lastaufnahmemittel 16 einem Lagerplatz zugeführt, durchtritt das Lagergut 34 den Sensorbereich des Sensors 40, unterbricht also den Lichtstrahl. Sobald das Lagergut 34 den Sensorbereich verlassen hat, ist die vorgegebene Position des Lagergutes 34 im Regal erreicht, und zwar so, dass das Lagergut 34 nicht über die Außenkante 52 des Regals 48 der Fig.2 hinaus ragt.

In Fig. 2 ist das erfindungsgemäße Regalbediengerät 10 in einer sogenannten Gasse 46 angeordnet, die zwischen zwei Lagerregalen 48 gebildet ist. Das Lastaufnahmemittel 16 des Regalbediengerätes 10 weist einen nicht näher dargestellten Antrieb auf, um Lagergut 34 den Lagerregalen 48 zu einer oder zu beiden Seiten des Regalbediengerätes 10 zuzuführen oder dieses Lagergut 34 den Lagerregalen 48 zu entnehmen. Die Zufuhr bzw. Entnahme erfolgt in Richtung der Pfeile 50.

Der Fig. 2 ist zu entnehmen, dass die Sensoren 40a, 40b am Rahmen 44 angeordnet sind, und zwar an beiden Seiten des Lastaufnahmemittels 16 in Pfeilrichtung 50. Es versteht sich, dass die Sensoren 40a, 40b oder die Einrichtungen zum Erfassen der Position eines Lagergutes 34 an einer im Wesentlichen beliebigen Position des Rahmens 44 angeordnet sein können.

Ein Sensor 40a, 40b kann beispielsweise eine nicht näher dargestellte Lichtschranke, eine ebenfalls nicht näher dargestellte Kamera, sowohl in analoger als auch in digitaler Ausführung, und schließlich auch ein in Fig. 2 nicht dargestellter, beliebig ausgeführter Näherungsschalter sein.

In Fig. 2 sind noch Außenkanten 52 der Regale 48 dargestellt, über die ein eingelagertes Lagergut 54 nicht in Richtung des Regalbediengerätes 10 beziehungsweise in Richtungen einer parallel zum Längsverlauf der Gasse 46 ausgerichteten Mittelebene des Gasse 46 hinausragen darf. Ansonsten könnte das Lastaufnahmemittel 16 und/oder der Rahmen 44 und/oder weitere Teile des Regalbediengerätes 10 mit dem gelagerten Lagergut 54 zusammenstoßen.

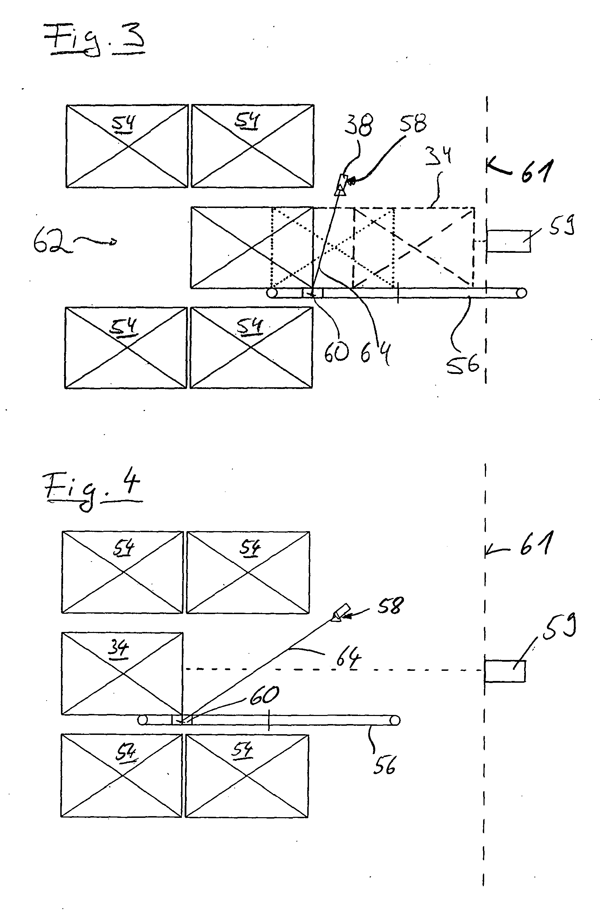

Der in Fig. 3 dargestellte Riemenzugförderer 56 ist Teil des Lastaufnahmemittels des erfindungsgemäßen Regalbediengerätes, das der Übersichtlichkeit halber in Fig. 3 nicht dargestellt ist. In Fig. 3 sind jedoch bereits eingelagerte und korrekt positionierte Lagergüter 54 sowie ein noch einzulagerndes Lagergut 34 dargestellt, wobei das noch zu lagernde Lagergut 34 in unterschiedlichen Positionen relativ zu einem Lagerplatz dargestellt ist. Des Weiteren ist in Fig. 3 eine beispielhafte Einrichtung 38 zum Erfassen der Position eines Lagergutes 34 dargestellt, die hier als Reflexionslichtschranke mit einer Sender-Empfängereinheit 58 sowie einem Reflektor 60 ausgebildet ist. Die Sender-Empfängereinheit 58 ist beispielsweise an einem Rahmen am Hubwagen und damit in konstantem Abstand zu einem gestrichelt angedeuteten Mast 61 angeordnet. Der Reflektor 60 ist am Riemenzugförderer 56 angeordnet und wird gemeinsam mit diesem in Richtung auf das Regal zu bzw. wieder von diesem weg bewegt. Der Riemenzugförderer 56 ist an einem nicht dargestellten Teleskoptisch angeordnet und kann daher in das Regal hinein- und wieder herausbewegt werden.

Wird das einzulagernde Lagergut 34 dem Bereich 62 des für das Lagergut 34 vorgesehenen Lagerplatzes zugeführt, so befindet sich das Lagergut außerhalb des in Fig. 3 nicht dargestellten Lagerregals, dessen Position jedoch durch die dargestellten gelagerten Lagergüter 54 ersichtlich ist. Zu dieser ersten Position des noch einzulagernden Lagergutes 34 ist dieses in Fig. 3 strichliniert dargestellt, wobei ersichtlich ist, dass das Lagergut 34 sich nicht bis in einen Sensorbereich 64 der Einrichtung 38 erstreckt.

Wird das einzulagernde Lagergut 34 mittels des Riemenzugförderers 56 auf das in Fig. 3 nicht dargestellte Regal zu bewegt, so nimmt das Lagergut 34 nacheinander die erste, strichliniert dargestellte Position, eine zweite gepunktet dargestellte Position sowie eine als Volllinie dargestellte dritte Position ein. Es ist der Fig. 3 zu entnehmen, dass die gepunktet dargestellte zweite Position das Erfassen des Lagergutes 34 ermöglicht. Wird das Lagergut 34 aus der gepunktet dargestellten Position weiter in die durchgezogen liniert dargestellte dritte Position transportiert, verlässt das Lagergut 34 den Sensorbereich 64 der Einrichtung 38 wieder. Durch entsprechendes Einrichten bzw. Ausrichten des Sensorbereiches 64 wird erreicht, dass das einzulagernde Lagergut 34 bündig mit einer definierten Kante positioniert werden kann, im vorliegenden Fall bündig mit der in Fig. 2 dargestellten Außenkante 52 der Lagerregale 48.

Die Darstellung der Fig. 4 zeigt den Riemenzugförderer 56 aus Fig. 3 beim Einlagern eines Lagerguts 34 in einen zweiten Regalplatz, der um etwas mehr als die Länge des Lagerguts 34 weiter vom Mast 61 entfernt ist als der erste Lagerplatz, auf den gemäß Fig. 3 das Lagergut 34 bewegt wurde. Das Regal ist in Bezug auf die Tiefe des Lagerguts 34 bzw. der bereits eingelagerten Lagergüter 54 doppelt tief ausgebildet. Die Beschreibung ist selbstverständlich lediglich beispielhaft und das erfindungsgemäße Regalbediengerät kann auch für die Einlagerung in vierfachtiefe Regale eingesetzt werden.

Um den hinteren Regalplatz zu erreichen, wird der Riemenzugförderer 56 auf dem nicht dargestellten Teleskoptisch um etwa die Tiefe des Lagerguts 34 weiter vom Mast 61 wegbewegt als dies gemäß Fig. 3 der Fall war. Die Position des Riemenzugförderers 56 bzw. des gesamten Lastaufnahmemittels mit Riemenzugförderer 56 und Teleskoptisch ist stets exakt bekannt, da hierfür beispielsweise Drehwinkelsensoren vorgesehen sind oder die Länge eines Ausschubs des Teleskoptisches sowie die exakte Lage des Lastaufnahmemittels am Mast 61 fortlaufend exakt erfasst wird. Damit ist auch die exakte Position des Reflektors 60 bekannt und der Reflektor 60 wird so weit vom Mast 61 weg in das Regal hineingeschoben, bis er sich in der in Fig. 4 dargestellten Lage befindet, also auf Höhe der Vorderkante des hinteren Regalplatzes. Der Riemenzugförderer 56 wird nun betätigt, bis die Sender-Empfängereinheit 58 wieder ein Lichtsignal vom Reflektor 60 empfängt, das Lagergut 34 also den Sensorbereich 64 verlassen hat. In dieser Position des Lagerguts 34 ist dieses somit exakt an der vorgesehenen Position, entsprechend dem hinteren Regalplatz, angeordnet und der Riemenzugförderer 56 kann abgeschaltet werden. Nachfolgend kann der Teleskoptisch zusammen mit dem Riemenzugförderer 56 zurückgezogen werden, bis dieser wieder frei durch die Lagergasse bewegbar ist.

Die Sender-Empfängereinheit 58 kann drehbar am Hubwagen befestigt sein, um stets exakt auf den Reflektor 60 ausgerichtet zu sein. Ist ein Abstandssensor 59 am Mast 61 vorgesehen und auf die der Lagergasse zugewandte Vorderseite des Lagerguts 34 gerichtet, so kann dessen Position fortlaufend während des gesamten Einlagerungsvorgangs und auch während des Auslagerns bestimmt werden.

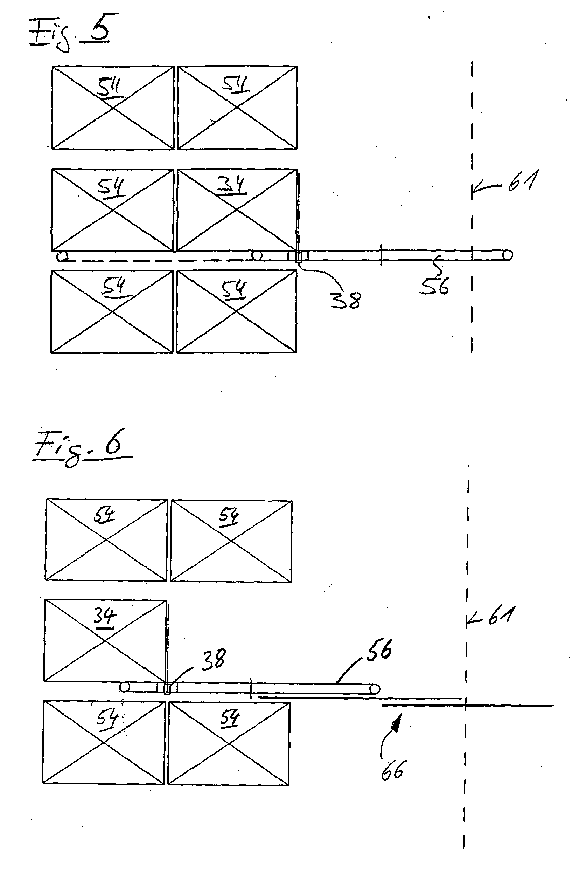

Die Darstellung der Fig. 5 zeigt eine weitere Ausführungsform eines erfindungsgemäßen Regalbediengeräts, bei der die Einrichtung 38 einen Näherungssensor aufweist. Der Näherungssensor 38 kann feststellen, ob sich ein Ladegut 34 über seiner Position auf dem Riemenzugförderer 56 befindet oder nicht.

In Fig. 4 sind bereits eingelagerte Lagergüter 54 dargestellt, denen ein neu eingelagertes Lagergut 34 hinzugefügt wurde. Dieses Lagergut 34 wurde ebenfalls mit dem Riemenzugförderer 56 eingelagert-Der Näherungssensor ist gemäß Fig. 4 so ausgerichtet, dass das Lagergut 34 bündig mit der definierten Vorderkante des Regals positioniert wird.

Die Position des Riemenzugförderers 56 und damit auch die Position des Näherungssensors der Einrichtung 38 ist exakt bekannt. Der Riemenzugförderer 56 wird mittels des nicht dargestellten Teleskoptisches also so weit in Richtung auf das Regal ausgefahren, bis sich der Näherungssensor exakt auf Höhe der Vorderkante des Regals befindet. Daraufhin wird der Riemenzugförderer 56 in Betrieb gesetzt und das Lagergut 34 so weit in das Regal hineingeschoben, bis dessen Vorderkante bündig mit der Vorderkante des Regals ist.

Die Darstellung der Fig. 6 zeigt das Regalbediengerät gemäß Fig. 5 beim Einlagern eines Lagerguts 34 in einen hinteren Regalplatz. Der Näherungssensor an der Einrichtung 38 wird zusammen mit dem Riemenzugförderer 56 über den schematisch dargestellten Teleskoptisch 66 so weit ausgefahren, bis er exakt auf der Vorderkante des hinteren Regalplatzes liegt. Der Riemenzugförderer 56 wird dann in Betrieb gesetzt, bis die Vorderkante des Lagerguts 34 exakt mit der Vorderkante des hinteren Regalplatzes fluchtet, wie in Fig. 6 dargestellt ist. Da die Position des Näherungssensors und vor allem dessen Abstand zum Mast 61 exakt bekannt ist, kann in der in Fig. 6 dargestellten Position des Lagerguts 34 exakt festgestellt werden, dass sich das Lagergut 34 auf dem hinteren Regalplatz befindet. Das Lastaufnahmemittel mit dem Riemenzugförderer 56 und dem Teleskoptisch 66 kann daher zurückgezogen werden.

Auch beim Auslagern von Lagergütern 34, 54 aus dem Regal kann mittels des Näherungssensors an der Einrichtung 38 exakt festgestellt werden, wo sich die Vorderkante des Lagerguts 34 befindet und der Riemenzugförderer 56 kann in die zum Auslagern benötigte Position verfahren werden.

Mit der Erfindung ist somit die Erfassung einer Position des Lagerguts beim Ein- und Auslagern im Regal möglich. Erfasst werden kann beispielsweise nur das Erreichen einer einzigen vordefinierten Position, beispielsweise die exakte Platzierung einer Vorderkante des Lagerguts relativ zum Regal, es können mehrere Stellungen des Lagerguts erfasst werden und auch eine fortlaufende Erfassung der Position des Lagerguts 34 im Regal während des Ein- und Auslagerns kann realisiert werden.

## Patentansprüche

1. Regalbediengerät mit wenigstens einem Mast (12), einem entlang dem Mast (12) verfahrbaren Hubwagen (14) und einem am Hubwagen (14) angeordneten Lastaufnahmemittel (16) zum Bewegen wenigstens eines Lagergutes (34) im Wesentlichen senkrecht zum Mast (12), **dadurch gekennzeichnet, dass** das Regalbediengerät (10) wenigstens eine Einrichtung (38, 40) zum Erfassen einer Position eines Lagergutes (34) im Regal (48) während des Zuführens von Lagergut (34) vom Lastaufnahmemittel (16) zu einem Lagerplatz im Regal (48) und umgekehrt aufweist.

2. Regalbediengerät nach Anspruch 1, **dadurch gekennzeichnet, dass** eine Position des Lagerguts (34) im Regal (48) fortlaufend während des Ein- oder Auslagerns von Lagergut (34) erfasst wird.

3. Regalbediengerät nach Anspruch 1, **dadurch gekennzeichnet, dass** eine Position des Lagerguts (34) im Regal (48) an wenigstens zwei Regalpunkten während des Ein- oder Auslagerns von Lagergut (34) erfasst wird.

4. Regalbediengerät nach einem der vorstehenden Ansprüche, **dadurch gekennzeichnet, dass** zumindest ein Teil der Einrichtung (38, 40) zum Erfassen der Position am Lastaufnahmemittel (16) angeordnet ist.

5. Regalbediengerät nach einem der vorstehenden Ansprüche, **dadurch gekennzeichnet, dass** die Einrichtung (38, 40) zum Erfassen der Position an einem das Lastaufnahmemittel (16) zumindest abschnittsweise umgebenden Rahmen (44) angeordnet ist.

6. Regalbediengerät nach einem der Ansprüche 1 bis 3, **dadurch gekennzeichnet, dass** zumindest ein Teil der Einrichtung (38, 40) zum Erfassen der Position an dem Hubwagen (16) angeordnet ist.

7. Regalbediengerät nach einem der Ansprüche 1 bis 3, **dadurch gekennzeichnet, dass** zumindest ein Abschnitt der Einrichtung (38, 40) zum Erfassen der Position am Mast (12) angeordnet ist.

8. Regalbediengerät nach einem der vorstehenden Ansprüche, **dadurch gekennzeichnet, dass** die Einrichtung (38, 40) zum Erfassen der Position eine Lichtschranke, ein Näherungsschalter, wenigstens eine Kamera und/oder wenigstens ein CCD-Array ist.

9. Regalbediengerät nach einem der vorstehenden Ansprüche, **dadurch gekennzeichnet, dass** die wenigstens eine Einrichtung (38, 40) zum Erfassen der Position des Lagergutes (34) ausgebildet und angeordnet ist, um die Position des Lagergutes (34) in einem Bereich einer dem Mast (12) zugewandten Außenkante (52) eines Regals (48) zu erfassen.

10. Regalbediengerät nach einem der vorstehenden Ansprüche, **dadurch gekennzeichnet, dass** das Regalbediengerät (10) wenigstens eine Steuervorrichtung für die Auswertung eines Ausgangssignals oder dergleichen der Einrichtung (38, 40) zum Erfassen aufweist.

11. Verfahren zum Betreiben eines Regalbediengerätes (10) mit wenigstens einem Mast (12), einem entlang dem Mast (12) verfahrbaren Hubwagen (14) und einem am Hubwagen (14) angeordneten Lastaufnahmemittel (16) zum Bewegen wenigstens eines Lagergutes (34) im Wesentlichen senkrecht zum Mast (12) nach wenigstens einem der vorstehenden Ansprüche, **gekennzeichnet durch** die Schritte
- Positionieren eines Lastaufnahmemittels (16) im Bereich eines Lagerortes (62) für das Lagergut (34),
- Bewegen des Lagergutes (34) im Wesentlichen senkrecht zum Mast (12) sowie
- Erfassen zumindest einer Position eines Lagergutes (34) im Regal (48) während des Zuführens von Lagergut (34) vom Lastaufnahmemittel (16) zu einem Lagerplatz im Regal (48) und umgekehrt.

12. Verfahren nach Anspruch 11, **gekennzeichnet durch** fortlaufendes Erfassen einer Position des Lagerguts (34) im Regal (48) während des Ein- und Auslagerns von Lagergut (34).

13. Verfahren nach Anspruch 11, **gekennzeichnet durch** Erfassen einer Position des Lagerguts (34) im Regal (48) an wenigstens zwei Regalpunkten während des Ein- und Auslagerns von Lagergut.

14. Verfahren nach einem der Ansprüche 11 bis 13, **gekennzeichnet durch** Erfassen einer Endposition des Lagergutes (34) relativ zum Hubwagen (14), Mast (12) und/oder Lastaufnahmemittel (16).

15. Verfahren nach einem der Ansprüche 11 bis 14, **dadurch gekennzeichnet, dass** die Endposition des Lagergutes (34) mittels einer Steuervorrichtung als erreicht erfasst wird, wenn das Lagergut (34) einen vordefinierten Abstand zum Hubwagen (14), Mast (12) und/oder zu einem definierten Punkt am Lastaufnahmemittel (16) aufweist.
